# EUROPÄISCHE PATENTANMELDUNG

(11) **EP 1 478 087 A2**
(43) Veröffentlichungstag der Anmeldung: **17.11.2004**
(21) Anmeldenummer: 04005093.2
(22) Anmeldetag: 04.03.2004
(51) Int. Cl.: H02P 9/30

(54) **Generatorregelung mit Haupt- und Hilfsregler**

(30) Priorität: 15.05.2003 DE 10321872
(71) Anmelder: ROBERT BOSCH GMBH, 70442 Stuttgart (DE)
(72) Erfinder: Suelze, Helmut, 71691 Freiberg (DE); Kohl, Walter, 74389 Cleebronn (DE); Homeyer, Kai-Oliver, 71634 Ludwigsburg (DE); Herbig, Ralf, 70197 Stuttgart (DE)

(57) **Zusammenfassung**

Die Erfindung betrifft eine Regelvorrichtung zum Regeln der Ausgangsspannung (Uₒᵤₜ) eines Generators (2), insbesondere eines Fahrzeuggenerators. Um die Ausfallsicherheit der Generatorregelung zu verbessern, wird vorgeschlagen, die Regelung bei Normalbetrieb mit Hilfe eines Hauptreglers (1) durchzuführen, der als Software in einem Steuergerät (4) realisiert ist, und bei einer Fehlfunktion des Hauptreglers (1) die Regelung mittels eines Hilfsreglers (13) durchzuführen.

## Beschreibung

Die Erfindung betrifft eine Regelvorrichtung zum Regeln der Ausgangsspannung eines Generators, insbesondere eines Fahrzeuggenerators, gemäß dem Oberbegriff des Patentanspruchs 1, sowie ein entsprechendes Regelverfahren gemäß dem Oberbegriff des Patentanspruchs 10.

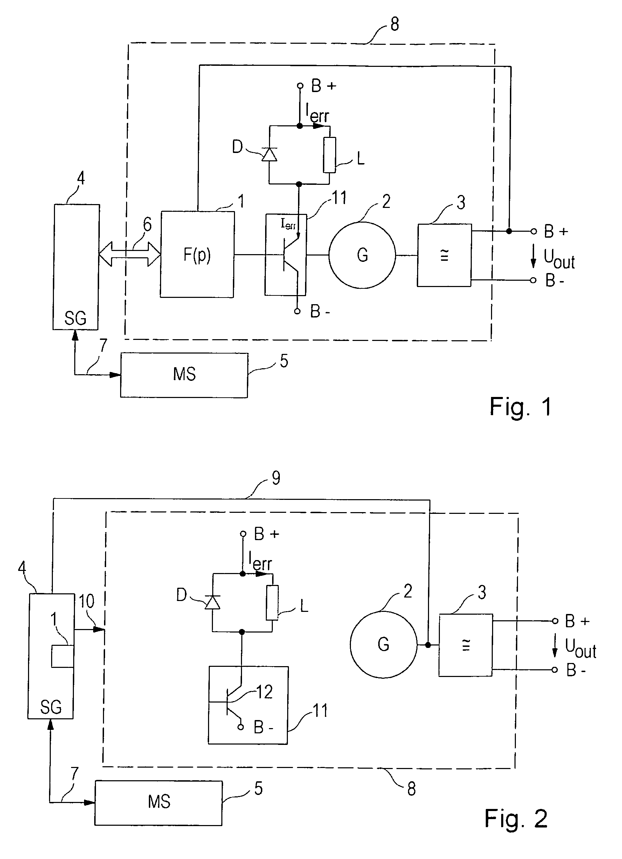

Zur Erzeugung einer Netzspannung von z. B. 14V werden in Kraftfahrzeugen üblicherweise fremderregte Synchronmaschinen eingesetzt. Die Generatoren umfassen einen Regler, mit dem die Ausgangsspannung des Generators auf eine für die Fahrzeugbatterie optimale Ladespannung geregelt wird. Der Generatorregler ist dabei i.d.R. zusammen mit dem Generator in einer Generatoreinheit baulich integriert. Bei einer anderen Ausführungsform, dem sog. "Wegbauregler", ist der Generatorregler extern vom Generator in einem Steuergerät angeordnet. Die verschiedenen aus dem Stand der Technik bekannten Bauformen einer Regelung für einen Fahrzeuggenerator werden nachfolgend anhand der Figuren 1 bis 3 beispielhaft näher erläutert.

Figur 1 zeigt eine Generatorregelung mit einem internen Generatorregler 1, d.h. der Generatorregler 1 ist in einer baulichen Generatoreinheit 8 mit integriert. Der Generatorregler 1 ist dabei als elektronische Schaltung in Hardware realisiert.

Die Generatoreinheit 8 umfasst z.B. einen drei- oder sechsphasigen Generator 2, einen Gleichrichter 3 zum Gleichrichten der Phasenspannungen U,V,W des Generators 2, den Generatorregler 1, sowie eine Leistungsendstufe 11, die vom Generatorregler 1 angesteuert wird, und über die ein gewünschter Erregerstrom in der Erregerspule L eingestellt wird.

Die Leistungsendstufe 11 umfasst einen Schalttransistor durch den der Erregerstrom Ierr fließt. Der Erregerstrom Ierr wird durch Ein- und Ausschalten des Transistors mit einem vorgegebenen Tastverhältnis in gewünschter Weise so eingestellt, dass sich in Abhängigkeit von Drehzahl und Last am Generator die gewünschte Phasenspannung am Generator 2 einstellt.

Die Regelanordnung umfasst ferner ein Steuergerät 4, mit dem bestimmte Regelvorgaben an den Regler 1 übertragen werden können. Das Steuergerät 4 ist hierzu über eine digitale Schnittstelle 6 mit dem Regler 1 verbunden. Vom Steuergerät 4 kann beispielsweise ein Sollwert der Generatorausgangspannung Uₒᵤₜ oder z. B. die maximal zulässige Steilheit der Änderung der vom Regler 1 ausgegebenen Stellgröße (DF Signal) vorgegeben werden.

In umgekehrter Richtung, d.h. vom Regler 1 zum Steuergerät 4, können z. B. Diagnosedaten oder andere Informationen, wie z. B. der Generator- oder Reglertyp, das aktuelle Tastverhältnis, oder Informationen betreffend den Generatorzustand, wie z. B. die Generatortemperatur, der Erregerstrom, Fehlerinformationen etc. über die digitale Schnittstelle 6 übertragen werden.

Das Steuergerät 4 kann ein Steuergerät zur Durchführung eines elektrischen Energie- und Verbrauchermanagements sein, das außerdem eine Batteriezustandserkennung zur Ermittlung vorgegebener Batterieparameter, wie z. B. des Ladezustands (SOC) oder der Leistungsfähigkeit (SOH) der Batterie umfasst. Am Steuergerät 4 ist eine Motorsteuerung 5 angeschlossen, welche aktuelle Daten über den Motorzustand, wie z. B. die Motordrehzahl oder die Motortemperatur an das Steuergerät 4 zur Bestimmung des Motormoments übermittelt.

Mit Hilfe dieser Daten kann bei der Berechnung der Sollspannung insbesondere das vom Motor verfügbare Drehmoment berücksichtigt werden, um ein Abwürgen des Motors durch den Generator 2 zu verhindern. Gerade bei geringen Drehzahlen und kleiner Motorleistung wird die Belastung des Verbrennungsmotors durch den Generator 2 gering gehalten und nur ein langsamer Anstieg des Erregerstroms Ierr zugelassen (dies wird auch als Load-Response-Funktion bezeichnet). Die Batterie muss das Bordnetz in der Zwischenzeit mit Energie versorgen, bis der Generator wieder genügend Leistung liefert.

Die in Fig. 1 dargestellte Regleranordnung mit einem in der Generatoreinheit 8 angeordneten Regler 1 hat den Vorteil, dass sie auch bei einer Fehlfunktion des Steuergeräts 4 oder einer Unterbrechung der digitalen Schnittstelle 6 weiterhin funktioniert. In diesem Fall regelt der Regler 1 die Generatorausgangsspannung Uout beispielsweise auf einen Standard- oder den zuletzt erhaltenen Sollwert. Ein wesentlicher Nachteil dieser Anordnung besteht jedoch darin, dass Elektronik direkt am Generator montiert ist und der integrierte Regler 1 und die Leistungsendstufe 11 wegen der hohen thermischen und mechanischen Belastungen am Generator 2 sehr aufwendig (d.h. teuer) geschützt bzw. verpackt werden müssen.

Es werden daher immer häufiger Regleranordnungen realisiert, bei denen empfindliche (elektronische) Baugruppen außerhalb der Generatoreinheit 8 angeordnet sind. Eine solche bekannte Anordnung ist in Figur 2 dargestellt.

Figur 2 zeigt eine Regleranordnung mit einem externen Generatorregler 1, bei der nur noch die Leistungsendstufe 11 in der Generatoreinheit 8 baulich integriert ist.

Der Generatorregler 1 ist in diesem Fall als Software realisiert und in einem externen Steuergerät 4 untergebracht. Die eigentliche Regelung, nämlich der Soll-/Istwert-Vergleich und die Berechnung der Stellgröße werden von der Software durchgeführt.

Die Stellgröße, im vorliegenden Fall ein Schaltsignal (sogenanntes DF-Signal), wird über eine Schnittstelle 10 an den Schalttransistor 12 der Leistungsendstufe 11 übertragen. Die Leistungsendstufe 11 stellt den durch die Erregerwicklung L fließenden Erregerstrom Ierr entsprechend ein. Parallel zur Erregerwicklung ist eine Freilaufdiode D geschaltet. Das Steuergerät 4 ist außerdem über eine Leitung 9 mit einer Phasenklemme, z. B. Klemme V, des Generators 2 verbunden, um den Generatorzustand zu überwachen.

Auch diese Bauform hat den Nachteil, dass die in der Leistungsendstufe 11 untergebrachte Elektronik, insbesondere der Schalttransistor 12, unmittelbar am Generator 2 angeordnet und somit hohen Temperaturen und starken Erschütterungen ausgesetzt ist. Der wesentliche Nachteil dieser Anordnung besteht jedoch darin, dass bei einem Ausfall des Steuergeräts bzw. einer Unterbrechung der Steuerleitung zur Leistungsendstufe 11 die Generatorregelung und damit auch der Generator 2 vollständig ausfällt. Eine Übertragung von Diagnoseinformationen des Generators an das Steuergerät 4 ist ebenfalls nicht möglich.

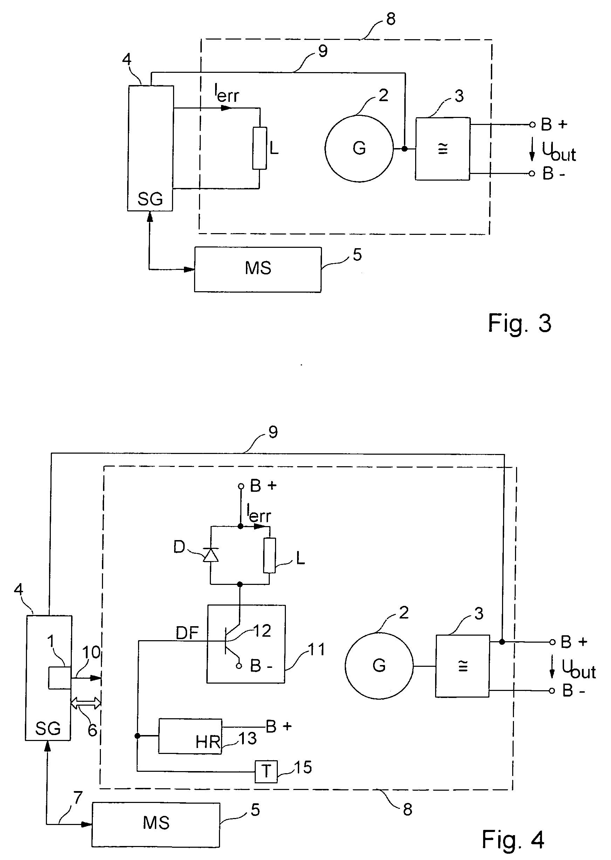

Figur 3 zeigt eine Regelanordnung, bei der sowohl der Generatorregler 1 als auch die Leistungsendstufe 11 vollständig aus der Generatoreinheit 8 ausgelagert und in das Steuergerät 4 integriert sind. Das Steuergerät 4 beinhaltet die Leistungsendstufe und ist über Anschlussleitungen unmittelbar mit der Erregerwicklung L verbunden und gibt als Stellgröße direkt den Erregerstrom Iₑᵣᵣ aus. Der Regelalgorithmus ist als Software im Steuergerät 4 integriert. Im übrigen ist diese Anordnung im wesentlichen identisch aufgebaut wie in Fig. 2.

Auch diese Bauform hat den wesentlichen Nachteil, dass bei einem Ausfall des Steuergeräts 4 die gesamte Generatorregelung und somit auch der Generator 2 ausfällt.

Es ist die Aufgabe der vorliegenden Erfindung, die Verfügbarkeit elektrischer Energie im Bordnetz zu erhöhen.

Gelöst wird die Aufgabe gemäß der Erfindung durch die im Patentanspruch 1 sowie im Patentanspruch 10 angegebenen Merkmale. Weitere Ausgestaltungen der Erfindung sind Gegenstand von Unteransprüchen.

Der wesentliche Gedanke der Erfindung besteht darin, einen separat zur Generatoreinheit angeordneten (externen) Hauptregler vorzusehen, der die Generatorregelung bei Normalbetrieb ausführt, und zusätzlich einen, vorzugsweise in der Generatoreinheit integrierten, Hilfsregler vorzusehen, der bei einer Fehlfunktion des Hauptreglers bzw. Unterbrechung einer Steuerleitung die Regelung übernimmt und eine Notfallregelung bzw. wenigstens eine Notfallsteuerung sicherstellt. Dies hat den Vorteil, dass der Generator auch bei einem vollständigen Ausfall des Hauptreglers noch eine vorgegebene Mindestspannung erzeugt. Darüber hinaus kann der Schaltungsaufwand des Hilfsreglers 13 gegenüber einem herkömmlichen integrierten Spannungsregler wesentlich reduziert werden, da der Hilfsregler nur einen sehr geringen Funktionsumfang haben muss.

Der Hauptregler ist vorzugsweise als Software in einem externen Steuergerät angeordnet. Einzelne Regelparameter können dadurch sehr einfach an verschiedene Applikationen oder Betriebszustände angepasst und auch bei Betrieb nachgestellt werden. Der Hilfsregler ist vorzugsweise als elektronische Schaltung in Hardware an der Generatoreinheit realisiert.

Ein weiterer wesentlicher Aspekt der Erfindung besteht darin, die Verfügbarkeit elektrischer Energie durch eine bidirektionale Abstimmung zwischen Verbrennungsmotor und Generator zu erhöhen. Bisher wurde der Generator bei einem sprunghaften Anstieg des Energiebedarfs nur langsam, entsprechend einer sog. Load-Response-Funktion, hoch geregelt, um eine zu hohe Belastung des Verbrennungsmotors gerade bei niedrigen Drehzahlen zu vermeiden. Vorzugsweise ist das externe Steuergerät nun derart eingerichtet, dass es die Motorsteuerung aktiv beeinflussen oder andere leistungserhöhende Maßnahmen treffen kann, wenn ein besonders hoher Leistungsbedarf besteht und die Stabilität des Bordnetzes gefährdet ist. Bei einem hohen elektrischen Leistungsbedarf im Bordnetz kann z. B. ein Signal an die Motorsteuerung übertragen werden, die den Verbrennungsmotor (im Leerlauf) in einen Arbeitspunkt mit höherer Motorleistung bzw. höherem Drehmoment bringt. Wahlweise könnte auch das Getriebe in einen kleineren Gang geschaltet werden, um den Motor auf höhere Drehzahlen zu bringen. Gerade bei einem drohenden Ausfall sicherheitsrelevanter elektrisch gestützter Systeme (z.B. Bremse, Lenkung) wegen Energiemangels kann somit die Generatorleistung schnell erhöht werden, ohne ein Abwürgen des Motors zu riskieren. Umgekehrt kann die Generatorleistung z.B. bei einem instabilen Motorzustand herabgesetzt werden.

Der erfindungsgemäße Hauptregler ist vorzugsweise derart eingerichcet, dass er, z.B. über digitale Schnittstellen, verschiedene Sensor- und Betriebszustandsinformationen erhalten kann, mit dem Ziel, ein stabiles Bordnetz unter Beachtung der Generatorleistungsfähigkeit, der Leistungsfähigkeit des Verbrennungsmotors, der elektrischen Verbraucher im Bordnetz und/oder des Batteriezustands zu gewährleisten. Der Hauptregler ist zu diesem Zweck vorzugsweise mit wenigstens einer Steuereinrichtung, wie z.B. dem Motorsteuergerät, und/oder einer Sensorik, wie z.B. einer Batteriezustandserkennung und/oder einer Klemme (B+) im Bordnetz verbunden.

Gemäß einer bevorzugten Ausführungsform der Erfindung umfasst die Generatoreinheit eine Leistungsendstufe mit einem Schalttransistor zur Einstellung des Erregerstroms. Der externe Hauptregler erzeugt in diesem Fall Steuersignale für den Transistor der Leistungsendstufe.

Die vom Hauptregler an die Leistungsendstufe ausgegebene Stellgröße kann z.B. über eine PWM-(PWM: Pulsweitenmodulation) oder eine digitale Schnittstelle übertragen werden. Bei digitaler Übertragung kann das digitale Signal von einer geeigneten Einrichtung, die beispielsweise im Hilfsregler mit integriert ist, in ein entsprechendes Ansteuersignal für den Schaltransistor der Leistungsendstufe umgesetzt werden.

Gemäß einer bevorzugten Ausführungsform der Erfindung wird die vom Hauptregler ausgegebene Stellgröße, z. B. durch Überprüfung ihres Absolutwertes oder ihrer Änderungsrate, auf Plausibilität hin überprüft. Die Funktion der Regelung wird vorzugsweise Schwellenwert überwacht. Eine Fehlfunktion des Hauptreglers oder eine Unterbrechung der Schnittstelle kann somit einfach erkannt werden, wenn z. B. der Absolutwert oder die Änderungsrate der Stellgröße vorgegebene Schwellenwerte überschreitet.

Der externe Hauptregler ist vorzugsweise mit einer Motorsteuerung verbunden, die vorzugsweise aktuelle Kenngrößen des Verbrennungsmotors, wie z. B. die Motordrehzahl oder das Motormoment bzw. Daten zur Bestimmung desselben, an das Steuergerät übermittelt, das diese Kenngrößen bei der Regelung des Generators berücksichtigen kann. Dadurch kann gerade bei niedrigen Motorleistungen und - drehzahlen durch entsprechend langsame Steigerung der Generatorleistung ein Abwürgen des Verbrennungsmotors verhindert werden. Diese "sanfte" Regelung wird auch als LR-Regelung (LR: Load Response) bezeichnet.

Die Generatoreinheit umfasst vorzugsweise einen Temperatursensor, der die Generatortemperatur oder eine proportionale Größe misst. Das Sensorsignal wird an den Hauptregler und vorzugsweise auch an den Hilfsregler übertragen, so dass der Generator im Normal- als auch im Notfallbetrieb bei Überhitzung herab geregelt werden kann.

Die Erfindung wird nachstehend anhand der beigefügten Zeichnungen beispielhaft näher erläutert. Es zeigen:
Fig. 1 eine erste Ausführungsform einer Generatorregelung gemäß dem Stand der Technik;
Fig. 2 eine zweite Ausführungsform einer Generatorregelung gemäß dem Stand der Technik;
Fig. 3 eine dritte Ausführungsform einer Generatorregelung gemäß dem Stand der Technik;
Fig. 4 eine Regelanordnung zur Regelung eines Fahrzeuggenerators gemäß einer ersten Ausführungsform der Erfindung;
Fig. 5 eine Regelanordnung zur Regelung eines Fahrzeuggenerators gemäß einer zweiten Ausführungsform der Erfindung; und
Fig. 6 ein Flussdiagramm zur Darstellung der wesentlichen Verfahrensschritte einer Generatorregelung gemäß der Erfindung.

Bezüglich der Erläuterung der Figuren 1 bis 3 wird auf die Beschreibungseinleitung verwiesen.

Figur 4 zeigt eine Regelanordnung zur Regelung der Ausgangsspannung Uₒᵤₜ eines Fahrzeuggenerators 2 mit Hilfe eines externen Generatorreglers 1. Die Regelanordnung umfasst eine Generatoreinheit 8, in der der Generator 2 mit einem Gleichrichter 3, einer Leistungsendstufe 11 und einem Hilfsregler 13 in einer baulichen Einheit integriert ist. Die Generatoreinheit beinhaltet ferner eine Erregerwicklung L und eine Freilaufdiode D. Die Leistungsendstufe 11 umfasst einen Transistor 12, der von einem Steuergerät 4 mit einem vorgegebenen Tastverhältnis angesteuert wird.

Der Hauptregler 1 ist von der Generatoreinheit 8 baulich getrennt im Steuergerät 4 als Software implementiert. Das Steuergerät 4 kann beispielsweise ein Steuergerät zur Durchführung eines elektrischen Energie- und Verbrauchermanagements, ein Motorsteuergerät oder ein zentraler Computer sein.

Bei Normalbetrieb wird die Generatorregelung vom Hauptregler 1 durchgeführt, der in Abhängigkeit von der aktuellen Ist-Spannung und unter Berücksichtigung der zur Verfügung stehenden Motorleistung eine entsprechende Stellgröße erzeugt. Die Stellgröße kann der Leistungsendstufe 11 entweder über eine PWM-Schnittstelle 10, oder eine digitale Schnittstelle 6 zugeführt werden. Die Stellgröße wird vom Hilfsregler 13 in ein entsprechendes Ansteuersignal für den Schalttransistor 12 gewandelt (wahlweise könnte das Ansteuersignal auch direkt an den Transistor 12 übertragen werden).

Das Tastverhältnis (Ein-Zeit/Aus-Zeit) bestimmt die Höhe des durch die Erregerwicklung L fließenden Erregerstroms Iₑᵣᵣ und damit die Höhe der Phasenspannungen, die in den Statorwicklungen des Generators 2 induziert werden. Der Gleichrichter 3 dient zur Gleichrichtung der Phasenspannungen des Generators 2 und erzeugt an seinem Ausgang die Generatorausgangsspannung Uₒᵤₜ.

Die vom Hauptregler 1 ausgegebene Stellgröße wird von einer geeigneten Einrichtung, die z. B. im Hilfsregler 13 integriert ist, auf ihre Plausibilität hin überprüft. Ein Kriterium für die Plausibilität der Stellgröße kann beispielsweise die Steilheit ihrer Änderung oder ihr absoluter Wert sein.

Solange sich die Stellgröße in einem vorgegebenen Bereich innerhalb vorgegebener Grenzwerte bewegt (Normalbetrieb), übt der Hilfsregler 13 keine Regelfunktion aus. Wird dagegen eine Fehlfunktion oder ein Ausfall des Hauptreglers 1 festgestellt, wird der Hilfsregler 13 aktiv und übernimmt eine Notregelung oder zumindest eine Notsteuerung des Generators 2. Dabei kann der Hilfsregler 13 die Regelgröße z. B. auf einen festen Sollwert regeln oder z. B. das zuletzt erhaltene plausible Steuersignal oder einen Mittelwert des Steuersignals als Hilfs-Stellgröße verwenden.

Über die digitale Schnittstelle 6 können ferner definierte Daten von der Generatoreinheit 8 an das Steuergerät 4 übertragen werden. Dabei kann es sich z. B. um Diagnoseparameter, das aktuelle DF-Signal, den aktuellen Erregerstrom Iₑᵣᵣ, eine Generatortemperatur oder Fehlermeldungen handeln.

Die Generatoranordnung umfasst ferner einen Temperatursensor 15 zur Messung der Generatortemperatur oder einer proportionalen Größe. Die Generatortemperatur wird vorzugsweise sowohl an den Hauptregler 1 als auch an den Hilfsregler 13 übertragen. Bei einer Überhitzung des Generators 2 kann somit die Erregung und damit die Belastung des Generators verringert werden.

Der erfindungsgemäße Hauptregler 1 ist vorzugsweise derart eingerichtet, dass er, z.B. über digitale Schnittstellen 7, verschiedene Sensor- und Betriebszustandsinformationen erhalten kann, mit dem Ziel, ein stabiles Bordnetz unter Beachtung der Generatorleistungsfähigkeit, der Leistungsfähigkeit des Verbrennungsmotors, der elektrischen Verbraucher im Bordnetz und/oder des Batteriezustands zu gewährleisten. Der Hauptregler ist zu diesem Zweck vorzugsweise mit dem Motorsteuergerät 5, einer Batteriezustandserkennung (integriert im Steuergerät4) und der Klemme B+ des Bordnetzes verbunden. In Abhängigkeit von den erhaltenen Informationen über die Leistungsfähigkeit des Verbrennungsmotors (Motormoment), den Batteriezustand, etc. kann durch eine angepasste Regelung des Generators 8 die Versorgung des Bordnetzes optimiert werden.

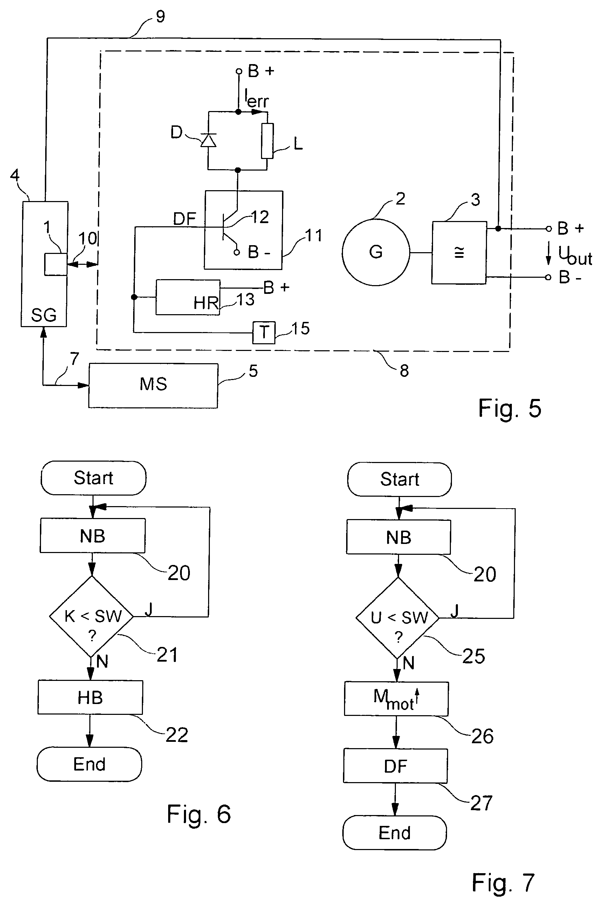

Figur 5 zeigt eine zweite Ausführungsform einer Regelanordnung gemäß der Erfindung, bei der im Unterschied zu Figur 4 eine PWM-Schnittstelle 10 zwischen Steuergerät 4 und Generatoreinheit 8 vorgesehen ist. Diagnosedaten und andere Informationen können bei dieser Ausführungsform z. B. während einer Initialisierungsphase von der Generatoreinheit 8 zum Steuergerät 4 übertragen werden, bevor die Regelung einsetzt. Die Regelung erfolgt dann zeitlich verzögert in umgekehrter Richtung.

Figur 6 zeigt die wesentlichen Verfahrensschritte der redundanten Generatorregelung in Form eines Flussdiagramms. In Schritt 20 wird ein Normalbetrieb durchgeführt, bei dem die Regelung vom Hauptregler 1 ausgeführt wird. In Schritt 21 wird mittels einer in der Generatoreinheit 8 enthaltenen Logik, die z. B. im Hilfsregler 13 integriert sein kann, die vom Hauptregler 1 übertragene Stellgröße K auf Plausibilität hin überprüft, wobei z. B. eine Schwellenwert-Überwachung durchgeführt wird. Befindet sich die Stellgröße K oder eine Funktion der Stellgröße K, wie z. B. ein DF-Signal oder dessen Änderungsrate, innerhalb vorgegebener Schwellenwerte SW (Fall J), so wird der Normalbetrieb NB beibehalten. Bei Überschreiten eines vorgegebenen Schwellenwerts SW (Fall N) wird in Schritt 22 ein Hilfsbetrieb HB mittels des Hilfsreglers 13 durchgeführt, der den Betrieb des Generators 2 auch bei einem Ausfall des Hauptreglers 1 sicherstellt.

Ein weiterer wesentlicher Aspekt der Erfindung, der zu einer schnelleren Verfügbarkeit elektrischer Energie im Bordnetz führt, ist in Fig. 7 dargestellt. Im Rahmen des Normalbetriebs (Schritt 20) wird ständig überprüft, ob ausreichend Energie im Bordnetz zur Verfügung steht. Dies kann z.B. durch Überwachung der Netzspannung oder Auswertung von Einschaltanforderungen von Verbrauchern (Schritt 25) erfolgen. Bei ausreichender Versorgung (Fall J) wird der Normalbetrieb 20 fortgesetzt. Bei elektrischer Unterversorgung oder bevorstehender Unterversorgung (z.B. wegen einer Einschaltanforderung mehrerer großer Verbraucher) weist das Steuergerät 4 die Motorsteuerung 5 an, den Verbrennungsmotor in einen Arbeitspunkt mit höherem Motormoment zu bringen. Die Erregung (DF-Signal) des Generators 2 kann somit in Schritt 27 wesentlich schneller erhöht werden, ohne den Motor zu überlasten.

Bei der Generatorregelung können ferner weitere Betriebsinformationen, wie z. B. die Generatortemperatur, der Zustand der Fahrzeugbatterie, etc. berücksichtigt werden.

### Bezugszeichenliste

- 1: Generatorregler
- 2: Generator
- 3: Gleichrichter
- 4: Steuergerät
- 5: Motorsteuerung
- 6: digitale Schnittstelle
- 7: Schnittstelle zur Motorsteuerung
- 8: Generatoreinheit
- 9: Leitung
- 10: PWM-Schnittstelle
- 11: Leistungsendstufe
- 12: Schalttransistor
- 13: Hilfsregler
- 15: Temperatursensor
- 20-22: Verfahrensschritte
- D: Freilaufdiode
- L: Erregerwicklung
- Uout: Ausgangsspannung
- Ierr: Erregerstrom

## Patentansprüche

1. Regelvorrichtung zum Regeln der Ausgangsspannung (Uₒᵤₜ) eines Generators (2), insbesondere eines Fahrzeuggenerators, der in einer baulichen Generatoreinheit (8) angeordnet ist, **gekennzeichnet durch**
- einen separat zur Generatoreinheit (8) angeordneten Hauptregler (1), der die Generatorregelung bei Normalbetrieb durchführt, wobei der Hauptregler (1) eine Stellgröße (DF, Iₑᵣᵣ) erzeugt, die an die Generatoreinheit (8) übertragen wird, und
- einen Hilfsregler (13) der bei einer Fehlfunktion des extern angeordneten Hauptreglers (1) die Generatorregelung oder wenigstens eine Generatorsteuerung übernimmt.

2. Regelvorrichtung nach Anspruch 1, **dadurch gekennzeichnet, dass** der Hauptregler (1) als Software in einem Steuergerät (4) realisiert ist.

3. Regelvorrichtung nach Anspruch 1 oder 2, **dadurch gekennzeichnet, dass** der Hilfsregler (13) als Schaltung in Hardware ausgeführt ist.

4. Regelvorrichtung nach Anspruch 3,**dadurch gekennzeichnet, dass** der Hilfsregler (13) in der Generatoreinheit (8) baulich integriert ist.

5. Regelvorrichtung nach einem der vorhergehenden Ansprüche, **dadurch gekennzeichnet, dass** eine Einrichtung (13) vorgesehen ist, die die vom Hauptregler (1) zugeführte Stellgröße (DF, Iₑᵣᵣ) auf Plausibilität hin überprüft, um eine Fehlfunktion zu erkennen.

6. Regelvorrichtung nach einem der vorhergehenden Ansprüche, **dadurch gekennzeichnet, dass** der Hauptregler (1) ein Schaltsignal (DF) für eine Schaltendstufe (12) oder einen Erregerstrom Iₑᵣᵣ als Stellgröße ausgibt.

7. Regelvorrichtung nach einem der vorhergehenden Ansprüche, **dadurch gekennzeichnet, dass** der Hauptregler (1) mit einer Motorsteuerung (5) in Verbindung steht und eine Information über die Motorleistung bei der Regelung berücksichtigt.

8. Regelvorrichtung nach Anspruch 7, **dadurch gekennzeichnet, dass** das Steuergerät (4) derart eingerichtet ist, dass es bei einem hohen Bedarf an elektrischer Leistung die Motorleistung eines Verbrennungsmotors erhöhen oder bei instabilem Motorzustand die Generatorleistung herabsetzen kann.

9. Regelvorrichtung nach einem der vorhergehenden Ansprüche, **dadurch gekennzeichnet, dass** ein Temperatursensor (15) zum Schutz des Generators vor Überhitzung vorgesehen ist, der seinen Messwert an den Hauptregler (1) und den Hilfsregler (13) übermittelt.

10. Verfahren zum Regeln der Ausgangsspannung (Uₒᵤₜ) eines Generators (2), der in einer baulichen Generatoreinheit (8) angeordnet ist, **gekennzeichnet durch** folgende Schritte:
- Regeln der Ausgangsspannung (Uₒᵤₜ) eines Generators (2) mittels eines Hauptreglers (1), der außerhalb der Generatoreinheit (8) angeordnet ist, und
- Regeln oder Steuern der Generatorausgangsspannung (Uₒᵤₜ) mittels eines Hilfsreglers (13) bei einer Fehlfunktion des Hauptreglers (1).

11. Verfahren nach Anspruch 10, **dadurch gekennzeichnet, dass** der Hauptregler (1) oder der Hilfsregler (13) ein Steuersignal (DF) für eine in der Generatoreinheit (8) enthaltene Schaltendstufe (12) als Stellgröße ausgibt.

12. Verfahren nach Anspruch 10 oder 11, **dadurch gekennzeichnet, dass** der Hauptregler (1) und der Hilfsregler (13) über eine digitale Schnittstelle (6) miteinander kommunizieren.

13. Verfahren nach einem der Ansprüche 10 bis 12, **dadurch gekennzeichnet, dass** die vom Hauptregler (1) ausgegebene Stellgröße (DF) über eine analoge Schnittstelle an die Generatoreinheit (8) übertragen wird.
